# EUROPÄISCHE PATENTANMELDUNG

(11) **EP 4 095 742 A1**
(43) Veröffentlichungstag der Anmeldung: **30.11.2022**
(21) Anmeldenummer: 21176016.0
(22) Anmeldetag: 26.05.2021
(51) Int. Cl.: G06K 9/00

(54) **VERFAHREN UND SYSTEM ZUR ÜBERWACHUNG EINES INNENRAUMS**

(71) Anmelder: Siemens Aktiengesellschaft, 80333 München (DE)
(72) Erfinder: Breitkopf, Florian, 80539 München (DE); Bretschneider, Chillon Carlos, 81929 München (DE); Cramer, Dieter, 81543 München (DE); Freudenberg, Oliver, 83547 Babensham (DE); Wachl, Michael, 80801 München (DE)

(57) **Zusammenfassung**

Es wird ein Verfahren zur Überwachung eines Zustands und/oder eines Prozesses in einem Innenraum (300) mittels eines Flugsystems (1) angegeben,
wobei das Flugsystem (1) eine Basisstation (200) und eine Flugdrohne (100) mit einem Fluggewicht unterhalb von 250 g umfasst,
wobei das Verfahren die folgenden Schritte umfasst:
a) Durchführung von ein oder mehreren autonomen Erkundungsflügen mit der Flugdrohne (100), wobei eine in die Flugdrohne (100) integrierte Kamera (180) dazu genutzt wird, ein dreidimensionales Objektmodell von dem Innenraum (300) zu erzeugen,
b) Durchführung von ein oder mehreren autonomen Überwachungsflügen, wobei ein in die Flugdrohne integrierter zusätzlicher Sensor (181) verwendet wird, um eine physikalische Eigenschaft in dem Innenraum (300) ortsaufgelöst zu messen.

Weiterhin wird ein Überwachungssystem zur autonomen Durchführung des Überwachungsverfahrens angegeben.

## Beschreibung

Die vorliegende Erfindung betrifft ein Verfahren zur Überwachung eines Zustands und/oder eines Prozesses in einem Innenraum. Weiterhin betrifft die Erfindung ein Überwachungssystem zur Durchführung dieses Verfahrens.

Die Überwachung von Zuständen und Prozessen in Innenräumen, insbesondere im Bereich von Industrieanlagen, wird zur Zeit meist durch stationär installierte Kamerasysteme sowie durch menschliches Personal durchgeführt. Es besteht ein Bedürfnis, solche Überwachungsaufgaben zunehmend zu automatisieren und damit den nötigen Personalaufwand zu reduzieren. Ein Nachteil von fest installierten Kamerasystemen liegt darin, dass mit ihnen zwar die Prozessabläufe in solchen Fertigungsanlagen im Groben überwacht werden können, dass jedoch bei Auftreten eines ungewöhnlichen Zustands, der ein potenzieller Fehlerzustand sein kann, häufig eine Detail-Kontrolle durch einen menschlichen Mitarbeiter nötig ist. Dies liegt daran, dass fest installierte Kamerasysteme aufgrund von Abschattungen nicht jeden Ort im Raum erfassen können, und dass aufgrund der gegebenen Entfernung und des vorgegebenen Sichtwinkels bestimmte Arten von Detailaufnahmen von kritischen Zielobjekten oder Teilbereichen nicht immer möglich sind. Weiterhin ist ein solches fest installiertes Kamerasystem typischerweise auf optische Informationen zur Überwachung eines Zustands bzw. eines Prozesses beschränkt. Für manche Überwachungsaufgaben kann es aber wünschenswert sein, zusätzlich zur rein visuellen Information weitere Messdaten im Bereich eines bestimmten Zielobjekts oder Detailbereichs zu erhalten, um z.B. bestimmte Fehlerzustände verifizieren oder ausschließen zu können oder auch um einen Prozessfortschritt auf andere Weise als durch optische Informationen zu überwachen. Dies beinhaltet ggf. auch einen Soll-/Ist-Vergleich der gemessenen Daten im Verhältnis zu einem Modell, z.B. zu einem digitalen Zwilling.

Um diese Lücken zu schließen, wird bei herkömmlichen Anlagen meist neben einer automatisierten Überwachungsanlage zusätzlich noch menschliches Personal eingesetzt, um z.B. bei einem Verdacht auf einen Fehlerzustand eine detaillierte optische Inspektion und gegebenenfalls auch eine anderweitige Messung in dem relevanten Teilbereich des Innenraums durchzuführen.

Aufgabe der Erfindung ist es daher, ein Verfahren zur Überwachung eines Innenraums anzugeben, welches die genannten Nachteile überwindet. Insbesondere soll ein Verfahren zur Verfügung gestellt werden, welches eine automatisierte Überwachung eines Zustands und/oder eines Prozesses mit verringerten Überwachungslücken ermöglicht. Eine weitere Aufgabe ist es, ein Überwachungssystem anzugeben, mit dem ein solches Verfahren durchgeführt werden kann.

Diese Aufgaben werden durch das in Anspruch 1 beschriebene Verfahren und das in Anspruch 15 beschriebene Überwachungssystem gelöst.

Das erfindungsgemäße Verfahren dient zur Überwachung eines Zustands und/oder eines Prozesses in einem Innenraum, insbesondere einem Innenraum eines Gebäudes, und wird mittels eines Flugsystems durchgeführt. Das Flugsystem umfasst eine Basisstation und eine Flugdrohne mit einem Fluggewicht unterhalb von 250g. Dabei umfasst das Verfahren zumindest die folgenden Schritte:
a) Durchführung von ein oder mehreren autonomen Erkundungsflügen mit der Flugdrohne, wobei eine in die Flugdrohne integrierte Kamera dazu genutzt wird, ein dreidimensionales Objektmodell von dem Innenraum zu erzeugen,
b) Durchführung von ein oder mehreren autonomen Überwachungsflügen, wobei ein in die Flugdrohne integrierter zusätzlicher Sensor verwendet wird, um eine physikalische Eigenschaft in dem Innenraum ortsaufgelöst zu messen.

Allgemein ist eine Flugdrohne ein unbemanntes Luftfahrzeug, das entweder autonom (z.B. durch einen Computer oder Mikrocontroller gesteuert) oder auch durch einen menschlichen Benutzer ferngesteuert fliegen kann. Das erfindungsgemäße Verfahren wird speziell mit einer autonom flugfähigen Flugdrohne durchgeführt, wobei die dazu benötigte Kontroll- und Steuervorrichtung entweder in die Flugdrohne selbst oder in die zugehörige Basisstation integriert oder in ihrer Funktionalität auch auf beide Einheiten verteilt sein kann. Wesentlich ist nur, dass für die Steuerung der Flugdrohne kein menschlicher Benutzer notwendig ist. Die Flugdrohne kann insbesondere eine elektrische Antriebsvorrichtung aufweisen, die durch einen mitfliegenden Akkumulator mit elektrischer Energie versorgt wird. Die Basisstation kann insbesondere eine Plattform aufweisen, von bzw. auf welcher die Flugdrohne starten und landen kann. Diese Landeplattform kann dabei insbesondere gleichzeitig als Ladeplattform dienen, so dass der Akkumulator der Flugdrohne im gelandeten Zustand mit einer zur Basisstation gehörenden Ladevorrichtung elektrisch aufgeladen werden kann.

Die bei dem erfindungsgemäßen Verfahren eingesetzte Flugdrohne weist ein besonders geringes Gewicht unterhalb von 250 g auf. Eine derart leichte Flugdrohne ermöglicht den Einsatz für Überwachungsaufgaben, ohne eine wesentliche Störung oder Gefährdung für den Innenraum und insbesondere eine dort betriebene Industrieanlage darzustellen. Bei derart leichten Flugdrohnen ist außerdem die Regulierung weniger streng, und es liegen geringere gesetzliche Anforderungen in Bezug auf eine Registrierung bzw. Zulassung oder Betriebserlaubnis vor. Um ein solches geringes Fluggewicht zu erreichen, kann die Flugdrohne insbesondere so ausgestaltet sein, wie es in der noch nicht veröffentlichen europäischen Anmeldung mit dem Aktenzeichen 21163368.0 beschrieben ist. Der Inhalt dieser Anmeldung soll daher in den Offenbarungsgehalt der vorliegenden Anmeldung einbezogen sein.

In Schritt a) wird die Funktionalität der autonomen Flugfähigkeit dazu genutzt, ein oder mehrere Erkundungsflüge durchzuführen. Dabei wird eine in die Flugdrohne integrierte Kamera dazu genutzt, ein dreidimensionales Objektmodell von dem Innenraum zu erzeugen. Bei der Erzeugung des Objektmodells kann eine in die Flugdrohne integrierte Kontrollvorrichtung und/oder eine im Bereich der Basisstation angeordnete Kontrollvorrichtung mitwirken. Wesentlich ist, dass die Erzeugung des Objektmodells und die dafür durchzuführende Objekterkennung von dem Flugsystem autonom durchgeführt wird. Wesentlich ist auch, dass die Erzeugung des dreidimensionalen Objektmodells auf den optischen Daten der integrierten Kamera basiert. Dabei soll allerdings nicht ausgeschlossen sein, dass bei der Erzeugung zusätzlich auch die Daten eines oder mehrerer weiterer Sensoren genutzt werden. Die integrierte Kamera kann insbesondere eine monokulare Kamera sein, um das beschriebene geringe Fluggewicht einzuhalten. Insbesondere erfolgt die Erzeugung des Objektmodells auch ohne die Benutzung eines GPS-Signals (welches in Innenräumen häufig nicht verfügbar ist) und auch ohne die Verwendung eines LIDAR-Signals. Ein LIDAR-System ermöglicht zwar eine vergleichsweise genaue Erzeugung eines räumlichen Objektmodells, allerdings ist es vergleichsweise schwer, so dass der Verzicht auf diese Technologie zum Erreichen des vorab beschriebenen geringen Fluggewichts beiträgt. Die kamera-basierte Modellerzeugung kann also besonders vorteilhaft mit einer solchen leichten Flugdrohne umgesetzt werden.

Das in Schritt a) erzeugte Objektmodell kann insbesondere ausgehend von einer ersten Startposition aus aufgebaut werden und dann nach und nach mit jeder geflogenen Teilstrecke auf zusätzliche, von dort entfernt liegende Bereiche erweitert werden. Das Objektmodell kann somit im Laufe der Zeit inkrementell verbessert werden, so dass es im Verlauf eines Erkundungsfluges oder bei der Durchführung weiterer Erkundungs- und/oder Überwachungsflüge das Objektmodell immer weiter verfeinert werden kann. Dabei muss auch keine klare Trennung zwischen den Erkundungsflügen in Schritt a) und den Überwachungsflügen in Schritt b) vorliegen. Vielmehr können auch in einem gemeinsamen Flug sowohl Erkundungsaufgaben (insbesondere die fortlaufende Verfeinerung des Objektmodells) als auch Überwachungsaufgaben realisiert werden.

Im Rahmen der Überwachungsflüge in Schritt b) kann die unmittelbare Umgebung der jeweiligen Flugstrecke mit der in die Flugdrohne integrierten Kamera optisch überwacht werden. Zusätzlich zu dieser Möglichkeit der optischen Überwachung wird in jedem Fall auch ein weiterer in die Drohne integrierter Sensor verwendet, um eine physikalische Eigenschaft in dem Innenraum ortsaufgelöst zu messen. Dieser zusätzliche Sensor weist insbesondere ein anderes Messprinzip als das einer rein optischen Messung auf. Die mit diesem zusätzlichen Sensor gemessene physikalische Eigenschaft wird insbesondere in der jeweils aktuellen Flugposition der Drohne gemessen, so dass durch ein Abfliegen eines gewissen räumlichen Bereichs eine ortsaufgelöste Messung ermöglicht wird. Auf diese Weise kann ein Abrastern eines Teilbereichs des Innenraums erfolgen und in diesem Teilbereich ein Mapping von Messdaten bezüglich der ausgewählten physikalischen Eigenschaft erstellt werden. Es kann also mit anderen Worten ein Ortsprofil dieser Eigenschaft erzeugt werden, z.B. ein Temperaturprofil oder ein CO₂-Profil innerhalb des Innenraums. Dabei muss auch nicht der vollständige Innenraum abgerastert werden, sondern es reicht aus, wenn z.B. die lokale Umgebung eines bestimmten Zielobjekts oder ein besonders relevanter Teilbereich ortsaufgelöst untersucht wird.

Auf diese Weise kann durch die Überwachung des Innenraums nicht nur eine Überwachungslücke in Bezug auf die rein optische Überwachung mit festen Kameras geschlossen werden (also z.B. die Inspektion von "toten Winkeln"), sondern es wird eine weitere Mess-Funktionalität in der lokalen Umgebung des jeweils in Schritt b) angeflogenen Bereichs zur Verfügung gestellt. Es existieren verschiedene Sensoren, die jeweils klein und leicht ausgestaltet werden können und daher in die Flugdrohne mit der angegebenen Gewichtsklasse integriert werden können. Mit dieser zusätzlichen Funktionalität kann die Genauigkeit der Überwachung verbessert werden, insbesondere kann ein Fehlerzustand zuverlässiger erkannt werden und/oder es kann ein gewünschter Prozessfortschritt zuverlässiger erfasst und quantifiziert werden.

Besonders vorteilhaft ist der zu überwachende Innenraum ein Innenraum eines Gebäudes. Allerdings kann die Erfindung auch prinzipiell für andere Arten von Innenräumen eingesetzt werden, in denen ähnliche Verhältnisse vorliegen. Zum Beispiel kann es sich um einen Innenraum eines Fahrzeugs (z.B. eines Zuges oder eines Schiffes) oder auch einer anderen geschlossenen Anlage (z.B. einer Gasturbine oder eines Luftkanals oder einer anderen Art von Versorgungsschacht) handeln.

Das erfindungsgemäße Überwachungssystem ist zur autonomen Durchführung des erfindungsgemäßen Verfahrens ausgelegt. Das Überwachungssystem weist hierzu ein Flugsystem auf, das zur autonomen Durchführung der angegebenen Verfahrensschritte ausgelegt ist. Das Flugsystem umfasst wenigstens eine Basisstation und wenigstens eine autonom flugfähige Flugdrohne mit einer integrierten Kamera und wenigstens einem zusätzlichen integrierten Sensor. Die Vorteile des erfindungsgemäßen Überwachungssystems ergeben sich analog zu den bereits beschriebenen Vorteilen des erfindungsgemäßen Verfahrens.

Vorteilhafte Ausgestaltungen und Weiterbildungen der Erfindung gehen aus den von Anspruch 1 abhängigen Ansprüchen sowie der folgenden Beschreibung hervor. Dabei können die beschriebenen Ausgestaltungen des Verfahrens und des Überwachungssystems allgemein vorteilhaft miteinander kombiniert werden.

So kann bei der Erzeugung des dreidimensionalen Objektmodells in Schritt a) insbesondere ein sogenanntes SLAM-Verfahren genutzt werden, wobei SLAM für "Simultaneous Localization and Mapping" steht. Dies ist ein grundsätzlich aus der Robotik bekanntes Verfahren, welches unter Verwendung der optischen Kameradaten der Flugdrohne und gegebenenfalls zusätzlicher Sensordaten durchgeführt wird.

Die Erzeugung des Objektmodells basiert vorteilhaft auf einer automatischen Objekterkennung, die aufgrund der Kameradaten aus der Flugdrohne durchgeführt wird. Diese Objekterkennung erfolgt bevorzugt auf einem oder mehreren Prozessoren, die lokal in das Flugsystem integriert sind, also in die Flugdrohne und/oder in die Basisstation. Alternativ wäre auch prinzipiell eine cloud-basierte Objekterkennung möglich, aber vor allem für Industrieanwendungen ist es zu bevorzugen, wenn dieser Schritt aus Sicherheitsgründen lokal im Flugsystem stattfindet. Andere Teile der Datenverarbeitung, insbesondere die weitere Speicherung bzw. Auswertung der Flug- und Messdaten kann aber auch auf einem verteilten, dezentralen Computersystem erfolgen, also mit anderen Worten auf einem cloudbasierten System.

Die Flugdrohne kann beispielsweise als Multicopter oder als Helikopter ausgestaltet sein. Allgemein ist im Hinblick auf eine hohe Flugstabilität die Ausgestaltung als Multicopter besonders bevorzugt. Besonders vorteilhaft ist die Flugdrohne als Quadrocopter ausgestaltet. Alternativ kann sie aber auch ein Hexacopter, Octocopter, Bicopter oder Tricopter sein. Vor allem mit den höheren Rotorzahlen von 4, 6 oder 8 werden besonders stabile Fluglagen erreicht, und bei Rotorzahlen von 6 oder mehr kann auch eine gewisse Ausfallsicherheit in Bezug auf den Ausfall eines Rotors erreicht werden. Bei niedrigeren Rotorzahlen ist allerdings das Fluggewicht typischerweise geringer, so dass insgesamt der Quadrocopter besonders zweckmäßig ist.

Allgemein vorteilhaft kann innerhalb von Schritt a) die Erzeugung des dreidimensionalen Objektmodells unter Nutzung der Methode der Sensordatenfusion erfolgen, wobei zusätzlich zu den Messdaten der integrierten Kamera die Messdaten von einem weiteren Sensor mit einem unterschiedlichen Messprinzip verwendet werden. Mit anderen Worten soll es sich um einen weiteren Sensor handeln, der nicht auf einem optischen Messprinzip basiert. Dieser weitere Sensor kann entweder derselbe Sensor sein, der bereits in Schritt b) zur ortsaufgelösten Messung der physikalischen Eigenschaft verwendet wird. Besonders vorteilhaft ist es aber, wenn es sich um einen davon unabhängigen zweiten zusätzlichen Sensor handelt, der in die Flugdrohne integriert ist. Dies kann beispielsweise ein Intertialsensor bzw. eine inertiale Messeinheit sein (IMU für "inertial measurement unit"), welche einen oder mehrere Beschleunigungs- und/oder Drehratensensoren aufweisen kann. Die Verwendung eines solchen Inertialsensors ermöglicht es, die auf den optischen Kameradaten basierende autonome Flugnavigation zu unterstützen, indem zusätzliche Informationen über die zurückgelegte Strecke, Geschwindigkeit, Beschleunigung, Richtung, Orientierung und insbesondere auch eine eventuelle Schräglage daraus abgeleitet werden. Unter der "Sensordatenfusion" soll dabei eine aus dem Stand der Technik bekannte Methode verstanden werden, die zum Teil auch als Multisensordatenfusion" oder einfach als "Sensorfusion" bezeichnet wird. Bei dieser Methode werden die Ausgabedaten mehrere Sensoren verwendet, um ein einheitliches Objektmodell daraus abzuleiten, wobei insbesondere Vergleiche, geeignete Gewichtungen und/oder zeitliche Korrekturen der unterschiedlichen Daten eingesetzt werden.

Allgemein besonders vorteilhaft wird in Schritt b) die relevante physikalische Eigenschaft für eine Vielzahl von dreidimensional verteilten Gitterpunkten erfasst. Mit anderen Worten wird so ein Gitternetz von Messdaten erzeugt. Dieses Gitternetz muss aber nicht gleichmäßig dicht sein. Insbesondere kann dieses Gitternetz nur einen lokalen Teilbereich des Innenraums abdecken und/oder in einem besonders relevanten Teilbereich besonders engmaschig sein und in anderen Teilbereichen entweder ganz fehlen oder gröber ausgestaltet sein. Auf diese Weise kann bezogen auf die relevante physikalische Eigenschaft ein digitaler Zwilling des Innenraums erstellt werden, wobei die Informationsdichte in besonders interessanten Bereichen durch ein intensiveres Abfliegen und Messen innerhalb von Schritt b) erhöht sein kann.

Gemäß einer besonders bevorzugten Ausführungsform kann das Verfahren die folgenden zusätzlichen Schritte aufweisen:
c) Erkennung von ein oder mehreren ausgewählten Zielobjekten aufgrund einer Übereinstimmung mit einem vorgegebenen Zielobjekt-Typ und
d) Anfliegen der unmittelbaren Umgebung eines in Schritt c) erkannten Zielobjekts mit der Flugdrohne.
Der vorgegebene Zielobjekt-Typ kann beispielsweise ein bestimmter Robotertyp in einer Fertigungsanlage sein, der von der Flugdrohne angeflogen und in seiner Funktion oder seinem Betriebszustand überprüft wird. Alternativ kann es sich auch um ein Vorratslager handeln, das auf seinen Inhalt überprüft wird, um eine Gasleitung, die auf ein Leck überprüft wird, oder um eine Pflanze in einer Anlage für den automatisierten Pflanzenanbau, die auf ihr Wachstum oder sonstige Zustandsparameter überwacht wird. Das ausgewählte Zielobjekt soll dabei ein individuelles Objekt innerhalb des vordefinierten Typs handeln, das von der Flugdrohne durch Mustererkennung und Zuordnung zu dem Objekttyp autonom identifiziert wird. Zusätzlich zu dieser Zuordnung zu dem allgemeinen Objekttyp kann auch eine Zuordnung zu einem bestimmten Untertyp erfolgen. Z.B. kann die Flugdrohne selbständig erkennen, um welches spezielle Modell einer Klasse von Fertigungsrobotern oder um welche Pflanzensorte innerhalb einer Pflanzenfamilie es sich handelt.

Wesentlich ist im Zusammenhang mit dieser Ausführungsform, dass das einzelne Objekt innerhalb eines bestimmten Objekttyps nicht nur autonom erkannt wird, sondern dass anschließend in Schritt d) die Flugdrohne in die unmittelbare Umgebung des jeweils ausgewählten Zielobjekts fliegt. Wenn mehrere Objekte des relevanten Typs erkannt werden, können insbesondere auch mehrere individuelle Objekte nacheinander angeflogen werden. Dieses lokale Anfliegen in Schritt d) ermöglicht eine besonders genaue lokale Überwachung eines Zustands und/oder eines Prozesses in Bezug auf diese Objekte. Dazu kann für ein gegebenes Zielobjekt insbesondere Schritt d) wiederholt ausgeführt werden, um einen lokalen Zustand und/oder Prozessfortschritt kontinuierlich zu überwachen. So kann zum Beispiel überwacht werden, ob ein Fehlerzustand eintritt und gegebenenfalls auch ein Alarm ausgelöst werden und/oder ein Eingreifen eines menschlichen Mitarbeiters oder Nutzers veranlasst werden. So kann zum Beispiel eine Reparatur eines defekten Roboters veranlasst werden oder die Löschung eines Brandes, die Abdichtung eines Gaslecks, die Auffüllung von verbrauchten Materialien oder eine spezielle Behandlung einer Pflanze. Eine Vielzahl weiterer Beispiele für solche Interaktionen, die durch die beschriebene autonome Überwachung veranlasst werden können, sind hier denkbar. Ein anderer Aspekt ist, dass die Drohne auch auf einen anderweitig ausgelösten Alarm reagieren kann und getriggert dadurch mit sehr kurzer Reaktionszeit einen Kontrollflug unternehmen kann. Hier ist die Reaktionszeit wesentlich schneller, als wenn ein menschlicher Benutzer diese Überprüfung vornehmen muss.

Besonders vorteilhaft kann bei dieser Ausführungsform im Anschluss an Schritt d) der folgende zusätzliche Schritt erfolgen:
e) Durchführung einer vordefinierten Aufgabe am Ort des Zielobjekts durch die Flugdrohne.
Diese vordefinierte Aufgabe kann entweder im Flug oder auch im Anschluss an eine Landung der Flugdrohne im Bereich des Zielobjekts durchgeführt werden. Beispielsweise kann es sich um eine Messaufgabe handeln. Insbesondere kann die bereits in Schritt b) beschriebene ortsaufgelöste Messung einer vorgegebenen physikalischen Eigenschaft mit einem feineren Raster an Gitterpunkten in der lokalen Umgebung des Zielobjekts durchgeführt werden. Es kann sich aber auch um eine weitere Art der lokalen Messung handeln. Insbesondere kann nach einer lokalen Landung der Flugdrohne eine Geräusch- und/oder Vibrationsmessung im Bereich des Zielobjekts erfolgen. Wenn das Zielobjekt z.B. ein Teil einer Fertigungsanlage ist, dann kann mit einer solchen Geräusch- bzw. Vibrationsmessung der Verschleißzustand eines Antriebsmotors überwacht werden. Alternativ kann in Schritt e) aber auch eine andere Aufgabe durchgeführt werden, die nicht eine (reine) Messaufgabe ist, sondern bei der insbesondere auch eine Einwirkung auf das Zielobjekt stattfinden kann. Zum Beispiel kann mit die Flugdrohne als autonome Positionierhilfe dienen und einen Fertigungsroboter bei einer besonders präzisen Positionierung unterstützen, z.B. beim Greifen eines Objekts. Alternativ kann in einer Anlage für den Pflanzenanbau eine autonome Aussaat mit Hilfe der Flugdrohne erfolgen, da gerade Samenkörner auch bei einem geringen Abfluggewicht transportiert werden können. Aber auch Düngemittel oder Insektizide oder ähnliches können von der Flugdrohne in geringen Mengen in den Bereich einer Pflanze transportiert und dort abgesetzt werden.

Der in Schritt b) verwendete integrierte Sensor kann entweder ein einzelnes Sensorelement oder auch eine Kombination von mehreren Sensoren (insbesondere in einem kombinierten Sensormodul) umfassen. Dabei kann beispielsweise ein Temperatursensor, ein Feuchtesensor, ein CO₂-Sensor oder eine andere Art von Gassensor, ein Vibrationssensor oder eine andere Art von Bewegungssensor oder eine Kombination aus mehreren der genannten Sensortypen vorliegen. Der genannte Temperatursensor kann dabei beispielsweise ein Einzelsensor oder auch eine ortsaufgelöst messende Wärmebildkamera sein. Mit solchen Sensoren können auch bei geringem Sensorgewicht verschiedene Arten von physikalischen Eigenschaften ortsaufgelöst gemessen werden (insbesondere als Funktion der Flugposition), um so die Genauigkeit der Überwachung zu verbessern. Mit einer Wärmebildkamera kann zum einen überwacht werden, ob unerwünschte Hotspots im Bereich des Innenraums entstehen. Zum anderen kann auch über eine Wärmebildkamera festgestellt werden, ob z.B. Fenster oder Türen eines Gebäudes ohne Grund offenstehen.

Allgemein und unabhängig von der genauen konstruktiven Ausgestaltung und Funktionalität kann die Flugdrohne vorteilhaft eine Gesamtmasse unterhalb von 200 g aufweisen, besonders bevorzugt sogar von höchstens 150 g. Bei einer solchen besonders leichten Flugdrohne ist zum einen die Störung der Umgebung noch weiter reduziert. Die Geräuschentwicklung durch den Flugbetrieb ist typischerweise niedriger und die Luftverwirbelung durch die Drohne fällt geringer aus. Auch potenzielle Beschädigungen von Objekten oder die Verletzung von Menschen bei unerwünschten Kollisionen würden geringer ausfallen. Zum anderen sind solche besonders kompakten Drohnen auch geeignet, in schwer zugängliche Bereiche von Anlagen hineinzufliegen, beispielsweise in das Innere eines Schaltschranks oder in die Zwischenräume zwischen einzelnen Pflanzebenen einer Anbau-Anlage.

Besonders vorteilhaft kann das erfindungsgemäße Verfahren zur Überwachung eines Zustands und/oder eines Prozesses in einer Industrieanlage eingesetzt werden. Insbesondere kann dies eine industrielle Fertigungsanlage sein, die z.B. zur Durchführung von voll- oder teilautomatisierten Fertigungsprozessen ausgelegt ist. Hierzu kann die Fertigungsanlage ein oder mehrere Fertigungsroboter und/oder Förderanlagen aufweisen. Gegenüber einer Überwachung einer solchen Anlage mit stationären Kameras bietet das erfindungsgemäße Verfahren viele Vorteile, vor allem im Hinblick auf die Eliminierung von toten Winkeln und die Möglichkeit, zusätzlich zur optischen Überwachung in einem relevanten lokalen Teilbereich eine ortsaufgelöste Messung einer weiteren physikalischen Größe vornehmen zu können. Auf diese Weise kann zum Beispiel ein Fehlerzustand eines Roboters bzw. einer Förderanlage festgestellt werden und ggf. kann mittels der ortsaufgelösten Messung eine mögliche Fehlerursache untersucht werden. Abhängig von einem bestimmten auslösenden Ereignis oder auch im Rahmen einer routinemäßigen Prüfung können einzelne Fertigungsroboter bzw. Förderanlagen von der Flugdrohne angeflogen werden, und es können lokale Messungen in ihrer unmittelbaren Umgebung durchgeführt werden. Mit anderen Worten können solche Fertigungsroboter bzw. Förderanlagen als Zielobjekte in den optionalen Schritten c), d) und e) dienen. Andere Zielobjekte können aber auch beispielsweise Gas- oder Flüssigkeitsleitungen sein, die auf potenzielle Lecks untersucht werden oder allgemein mögliche Brandquellen in der Fertigungsanlage, die im Verdachtsfall durch die Flugdrohne auf die Entstehung eines Brands untersucht werden können. Eine solche Suche nach möglichen Brandursachen kann auch schon präventiv, also vor der Entstehung eines Brands oder eines sonstigen Fehlerfalls erfolgen, in dem z.B. überprüft wird, ob bestimmte Teile der Fertigungsanlage in den vorgesehenen Temperaturbereichen liegen oder ob das für das jeweilige Teil vorgegebene Temperaturfenster überschritten wird und durch eine solche Überhitzung ein Brand oder eine andere Art von Schädigung droht. Wenn durch die Flugdrohne eine solche Art von Fehlerfall detektiert wird, kann z.B. auch die Abschaltung eines bestimmten Geräts veranlasst werden, um einer Schädigung vorzubeugen.

Das erfindungsgemäße Verfahren kann vorteilhaft zur Überwachung eines Zustands und/oder eines Prozesses in einer Anlage für den automatisierten Pflanzenanbau eingesetzt werden. Eine solche Anlage kann insbesondere als Spezialfall einer industriellen Fertigungsanlage gesehen werden, bei dem das Fertigungsprodukt eine Pflanze bzw. ein Teil einer Pflanze ist. Auch hier kann die Flugdrohne dazu genutzt werden, einen Fehlerfall, also ein Abweichen von einem vordefinierten Zustand, zu erkennen. Zum Beispiel kann die Drohne optisch und/oder mit anderen Messverfahren erkennen, ob die Pflanzen gesund und ausreichend bewässert sind oder ob ein zusätzlicher Eingriff wie z.B. Wässerung bzw. Düngung nötig ist. Die Flugdrohne kann auch dafür genutzt werden, regelmäßig den Prozessfortschritt zu überwachen, also in diesem Fall z.B. das Wachstum der Pflanzen bzw. die Reifung von Früchten zu prüfen. So kann festgestellt werden, ob der Prozessfortschritt innerhalb des gewünschten Zielkorridors liegt. Für den Anwendungsfall des Pflanzenanbaus können die bei den optionalen Schritten c), d) und e) genannten Zielobjekte insbesondere einzelne Pflanzen sein. Der Zielobjekt-Typ kann dann z.B. einer bestimmten Pflanzensorte oder -gattung entsprechen. Gegebenenfalls können mit der Objekterkennung auch einzelne Objekte innerhalb eines solchen Zielobjekt-Typs individuell erkannt werden. Im Zusammenhang mit dem Pflanzenanbau ist es besonders vorteilhaft, wenn die Flugdrohne klein und leicht ausgestaltet ist, da dann auch ein Einfliegen in die Zwischenräume zwischen einzelnen horizontalen Pflanzetagen möglich ist.

Weiterhin ist es allgemein vorteilhaft, wenn das Verfahren zur Erkennung eines Brands und/oder eines unerwünschten Lecks eines Gases oder einer Flüssigkeit in einem Gebäude eingesetzt wird. Diese Anwendung kann insbesondere als Teilaspekt bei der oben beschriebenen Überwachung einer Industrieanlage bzw. einer Anlage für den Pflanzenanbau zum Tragen kommen. Es können aber auch Brände und/oder Lecks in anderen Arten von Gebäuden mit einem solchen Flugsystem überwacht werden, z.B. auch in Büro-, Klinik-, Labor- oder Wohngebäuden. Vor allem in denkmalgeschützten Gebäuden ist es oft nicht möglich, stationäre Überwachungssysteme für den Brandschutz in ausreichender Anzahl zu installieren. Hier kann die entstehende Überwachungslücke durch den beschriebenen Einsatz der Flugdrohne geschlossen werden.

Alternativ können solche Überwachungsflüge auch genutzt werden, um über die Lebensdauer eines Gebäudes hinweg, Änderungen zu erfassen: Zum Beispiel können Änderungen im Verlauf von Rohrleitungen, Verkabelungen wie elektrische oder optische Leitungen oder andere Gerätschaften und Installationen über längere Zeiträume überwacht und erfasst werden und somit eine längerfristige Dokumentation über das Gebäude erstellt werden.

Allgemein kann mit dem Verfahren ein Zustand derart überwacht werden, dass aus einer Abweichung der ortsaufgelöst gemessenen physikalischen Eigenschaft von einem Sollbereich auf das Vorliegen eines Fehlerzustands geschlossen wird. Mit anderen Worten kann die über den zusätzlichen Sensor gemessene physikalische Eigenschaft dazu genutzt werden zu bestimmen, ob ein Sollbereich der Eigenschaft verlassen wird. Wenn dies der Fall ist, kann daraus auf das Vorliegen eines Fehlerfalls geschlossen werden. Wenn ein solcher Fehlerfall erkannt wird, können gegebenenfalls weitere Schritte veranlasst werden wie z.B. die Abschaltung eines Anlagenteils, die Überprüfung durch einen menschlichen Mitarbeiter, die Löschung eines Brandes, die Trennung einer defekten Gas- oder Flüssigkeitsleitung oder die Abtrennung eines Geräts vom Stromnetz. Allgemein kann der jeweilige Sollbereich der physikalischen Eigenschaft ortsabhängig festgelegt sein: So kann z.B. in der unmittelbaren Umgebung einer Maschine eine höhere Temperatur toleriert werden als in einiger Entfernung davon, ohne dass daraus auf einen Fehlerfall geschlossen wird.

Auch der Zustand eines Materiallagers kann auf diese Weise überwacht werden, z.B. indem mit der Flugdrohne durch Einlesen von QR-Codes oder ähnlichem ein Lagerbestand erfasst wird und bei Über- oder Unterschreiten einer vorgestimmten Sollmenge weitere Maßnahmen wie ein Lieferstopp oder eine zusätzliche Materiallieferung ergriffen werden.

Alternativ oder zusätzlich kann mit dem Verfahren ein Prozess derart überwacht werden, dass aus einer wiederholten Messung der physikalischen Eigenschaft in Schritt b) ein Prozessfortschritt abgeleitet wird, welcher mit einem für den jeweiligen Zeitpunkt vorab festgelegten Zielwert verglichen wird. Mit anderen Worten kann die Einhaltung einer vorgegebenen zeitlichen Entwicklung der gemessenen Eigenschaft an einem bestimmten Ort beobachtet und überprüft werden. Auf diese Weise kann die Fertigstellung eines zu produzierenden Teils, das Wachstum einer Pflanze, oder auch das Verbrauchen von eingesetzten Materialien überprüft werden.

Allgemein kann es besonders vorteilhaft sein, wenn die Überwachung mittels des Flugsystems insgesamt drahtlos erfolgt. Mit anderen Worten soll dann nicht nur die Flugdrohne drahtlos mit den übrigen Komponenten des Flugsystems kommunizieren, sondern auch die Basisstation des Flugsystems soll keine drahtgebundenen Verbindungen zu den übrigen Teilen des Gebäudes aufweisen. In diesem Fall ist das ganze Flugsystem vorteilhaft energieautark ausgebildet und weist beispielsweise einen eigenen Akkumulator in der Basisstation auf.

Allgemein kann das gesamte Flugsystem vorteilhaft portabel ausgestaltet sein. Mit anderen Worten bildet also die Basisstation zusammen mit der Flugdrohne ein portables System. Hierzu kann die Basisstation beispielsweise in einen Koffer integriert sein oder als Koffer ausgestaltet sein. Es kann sich beispielsweise um einen Koffer mit zwei Halbschalen handeln, wobei die Landefläche z.B. in eine der Halbschalen integriert ist. Wenn der Koffer aufgeklappt auf dem Boden liegt, ist die Landefläche in einem horizontalen, betriebsbereiten Zustand. Allgemein kann die portable Basisstation eine elektrische Energieversorgung aufweisen, beispielsweise kann dort ebenfalls ein Akkumulator integriert sein. Alternativ oder zusätzlich ist aber auch eine Energieversorgung der Basisstation durch ein Stromnetz möglich. Die portable Basisstation kann auch ihrerseits auf einem fahrerlosen Transportfahrzeug angeordnet sein (einem sogenannten AGV für englisch "automated guided vehicle"). Wenn die Basisstation sozusagen huckepack von einem solchen AGV getragen wird, kann sie beispielsweise autonom näher an eine im Einsatz befindliche Flugdrohne heranfahren. Das ist vor allem dann vorteilhaft, wenn die Flugdrohne sich bereits nahe am Ende der Laufzeit ihres Akkumulators befindet.

Allgemein vorteilhaft wird das Überwachungsverfahren insgesamt autonom durchgeführt, also ohne Interaktion eines menschlichen Benutzers. Dabei soll allerdings nicht ausgeschlossen sein, dass z.B. nach der autonomen Detektion eines Fehlerfalls mit dem Überwachungsverfahren ein Eingriff eines menschlichen Benutzers zu Behebung des Fehlers veranlasst wird.

Besonders vorteilhaft wird die Navigation bei den autonomen Flügen der Flugdrohne in den Schritten a), b) und ggf. d) vollkommen autark und ohne Rückgriff auf ein fest installiertes Navigationssystem durchgeführt. Es gehört zu den wesentlichen Vorteilen der Erfindung, dass die automatisierte Erzeugung des Objektmodells allein durch die Erkundung der Umgebung möglich ist und das Mapping nicht auf die Verwendung von bestimmten externen Markierungen angewiesen ist. Alternativ zu dieser Ausführungsform ist es allerdings auch denkbar, dass fest installierte Marker in dem zu überwachenden Gebäude eingesetzt werden, die zur Unterstützung des Mappings beitragen. So können zum Beispiel an bestimmten Positionen des Innenraums AR- bzw. QR-Codes angebracht sein, um für die Flugdrohne die Orientierung und die Generierung des Objektmodells zu erleichtern.

Besonders vorteilhaft wird das Überwachungsverfahren auch ohne die Nutzung von fest installierten Kameras oder anderer stationärer Sensoren durchgeführt. Insbesondere ist das Verfahren nicht auf solche stationären Sensoren angewiesen. Alternativ ist es allerdings prinzipiell auch möglich, dass eine oder mehrere zusätzliche externe Kameras innerhalb des Innenraums dazu verwendet werden, die aktuelle Position der Flugdrohne zu bestimmen und somit das autonom erstellte Mapping zu kalibrieren bzw. zu verbessern. Auch dies kann mit einem mit der Kamera verbunden Prozessor und einer automatischen Objekterkennung auf Seite der Kamera erfolgen. Allgemein kann auch eine in die Basisstation integrierte Kamera für eine solche Kalibration der aktuellen Position verwendet werden, insbesondere wenn die Basisstation an einer genau bekannten Ortskoordinate des Innenraums positioniert wird.

Gemäß einer vorteilhaften Variante des Flugsystems kann dieses nicht nur eine, sondern mehrere Flugdrohnen umfassen. Alternativ oder zusätzlich kann das Flugsystem auch mehrere Basisstationen umfassen. Die einzelnen Flugdrohnen und/oder Basisstationen können untereinander verschieden und insbesondere verschieden groß ausgestaltet sein und trotzdem relativ flexibel aufeinander angepasst sein, wie bereits in der europäischen Anmeldung 21163368.0 erläutert. Diese hohe Flexibilität in der Anpassung ermöglicht es, größere Systeme von mehreren Teilelementen autonom zu betreiben und so insbesondere ein größeres autonomes Überwachungssystem zu realisieren.

Nachfolgend wird die Erfindung anhand einiger bevorzugter Ausführungsbeispiele unter Bezugnahme auf die angehängten Zeichnungen beschrieben, in denen:
- Figur 1: eine schematische perspektivische Darstellung eines Flugsystems zur Durchführung des erfindungsgemäßen Verfahrens zeigt,
- Figur 2: eine schematische Aufsicht einer Basisstation eines solchen Flugsystems zeigt,
- Figur 3: eine schematische perspektivische Darstellung eines zu überwachenden Innenraums mit einer industriellen Fertigungsanlage zeigt,
- Figur 4: eine schematische Darstellung einer zu überwachenden Innenraum-Anlage für den automatisierten Pflanzenanbau zeigt und
- Figur 5: ein Ablaufdiagramm für ein Ausführungsbeispiel des Verfahrens zeigt.

In den Figuren sind gleiche oder funktionsgleiche Elemente mit gleichen Bezugszeichen versehen.

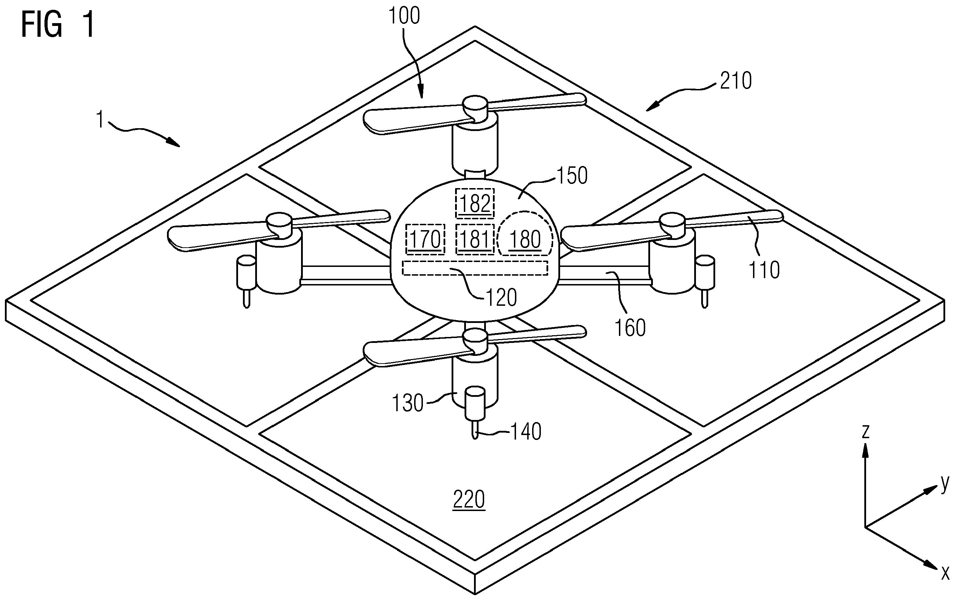

In Figur 1 ist eine schematische perspektivische Darstellung eines Flugsystems 1 gezeigt, welches zur Durchführung des erfindungsgemäßen Verfahrens ausgelegt ist und entsprechend ein erfindungsgemäßes Überwachungssystem ausbildet. Das Flugsystem 1 umfasst eine Flugdrohne 100 und eine dazu gehörende Basisstation 200. Es können aber auch mehrere solche Flugdrohnen 100 bzw. Basisstationen 200 umfasst sein. Figur 1 zeigt einen Systemzustand, bei dem die Flugdrohne 100 auf einer Landefläche 210 der Basisstation 200 gelandet ist. Diese Landefläche 210 ist eine ebene Fläche zum Starten und Landen der Flugdrohne. Sie ist im vorliegenden Beispiel in vier gleichartige Quadranten unterteilt, die jeweils ein Feld der Landefläche ausbilden. Diese einzelnen Felder 220 sind jeweils als Elektrodenfläche ausgebildet.

Die Flugdrohne 100 ist in diesem Beispiel als Quadrocopter ausgebildet. Sie ist mit einer elektrischen Antriebsvorrichtung ausgestattet, welche hier durch die vier Rotoren 110 repräsentiert ist. Die elektrischen Antriebsmotoren dieser vier Rotoren 110 werden durch einen Akkumulator 120 mit elektrischer Energie versorgt. Der Akkumulator 120 ist hier im Zentrum der Flugdrohne 100 innerhalb eines zentralen Drohnenkörpers 150 angeordnet. Von dem zentralen Drohnenkörper aus erstrecken sich vier Tragarme 160 nach lateral außen (also in x- bzw. y-Richtung vom Zentrum der Flugdrohne weg). Die zu den Tragarmen 160 senkrecht stehende z-Achse entspricht der vertikalen Raumrichtung. Es handelt sich in diesem Beispiel bei dem Multicopter um eine im Wesentlichen senkrecht (in z-Richtung) startende und landende Flugdrohne.

In ihren (bezüglich der z-Achse) radial außenliegenden Bereichen sind die vier Tragarme 160 jeweils mit einem Standfuß 130 versehen, welcher unterhalb des zugeordneten Rotors 110 sitzt. Diese vier Standfüße bilden zusammen das Landegestell der Flugdrohne. Bei einer Landung auf der Landefläche 210 oder auf einer anderen ebenen Fläche kommt die Flugdrohne auf diesen vier Standfüßen 130 zum Stehen. Bei der besonders vorteilhaften Ausführungsform des Flugsystems gemäß der Anmeldung 21163368.0 weist jeder dieser vier Standfüße 130 im untenliegenden Bereich eine Kontaktelektrode 140 auf. In diesem Beispiel sind die vier Kontaktelektroden 140 als Federkontaktstifte ausgebildet. Die einzelnen Kontaktelektroden sind über hier nicht gezeigte Verbindungsleitungen in oder an den jeweiligen Standfüßen und Tragarmen mit dem zentralen Akkumulator 120 elektrisch verbunden.

Die Flugdrohne 100 weist beim Beispiel der Figur 1 innerhalb ihres zentralen Drohnenkörpers 150 neben dem Akkumulator 120 auch noch ein oder mehrere Mikroprozessoren 170, eine Kamera 180 und ein oder mehrere zusätzliche Sensoren 181, 182 auf.

Ein erster Mikroprozessor 170 ist beispielsweise dazu vorgesehen, eine autonome Steuerung der Flugdrohne zu realisieren. Diese Flugdrohne ist also autonom flugfähig und kann beispielsweise für Überwachungsaufgaben im Innenraumbereich, insbesondere in einer industriellen Fertigungsanlage, eingesetzt werden. Ein zweiter, hier nicht gesondert dargestellter Mikroprozessor ist beispielsweise zur Lageregelung vorgesehen.

Mit dem ersten Mikroprozessor 170 kann auch die Kamera 180 der Flugdrohne angesteuert und ausgelesen werden. Mit dieser Kamera 180 kann die Flugdrohne 100 autonom visuelle Daten über ihre Umgebung sammeln und mit diesen ihr eigenes Flugverhalten steuern bzw. optimieren. Insbesondere kann aufgrund der Kameradaten ein dreidimensionales Objektmodell von dem zu überwachenden Innenraum erzeugt werden. Unter Verwendung dieses Objektmodells können von dem Flugsystem autonome Überwachungsflüge zur Überwachung des Innenraums ausgeführt werden. Der erste zusätzliche Sensor 181 wird dazu verwendet, um während dieser Überwachungsflüge eine physikalische Eigenschaft in dem Innenraum ortsaufgelöst zu messen. Beispielsweise kann es sich bei diesem zusätzlichen Sensor um einen Temperatursensor zur ortsaufgelösten Temperaturmessung oder um einen Gassensor zur ortsaufgelösten Messung einer Gaskonzentration oder um einen der anderen der weiter oben genannten Sensortypen handeln.

Der optional vorhandene zweite zusätzliche Sensor 182 kann insbesondere dazu ausgelegt sein, zusätzliche Messdaten für die Erzeugung des dreidimensionalen Objektmodells beizusteuern, so dass die Methode der Sensordatenfusion bei der Erstellung des Objektmodells genutzt werden kann. Dieser zweite zusätzliche Sensor 182 kann beispielsweise ein Inertialsensor sein.

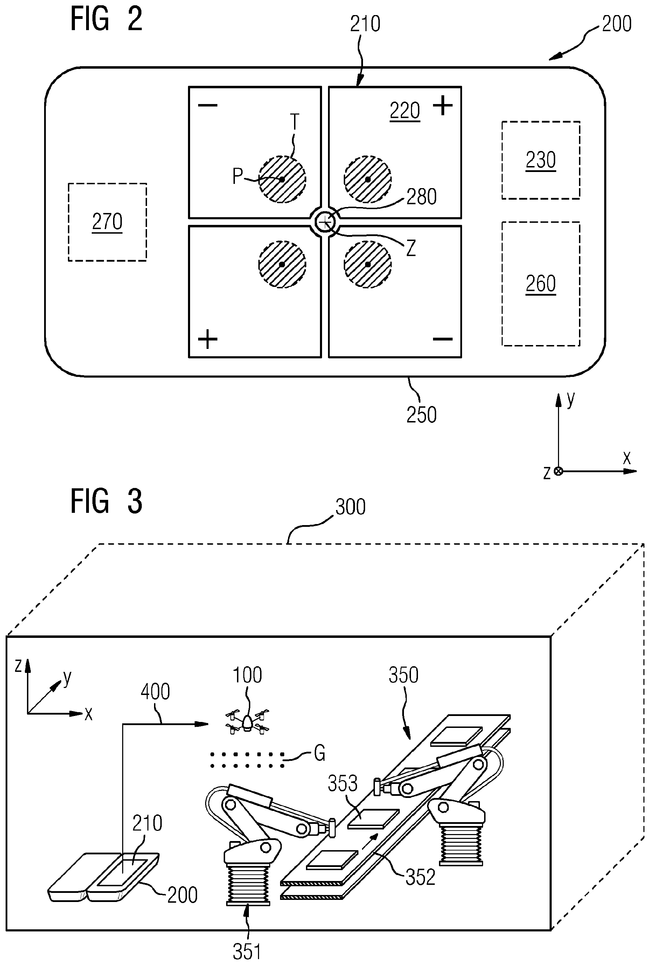

Figur 2 zeigt eine schematische Aufsicht einer Basisstation 200 (oder eines Teils davon), die als Teil eines solchen Flugsystems für die Durchführung des erfindungsgemäßen Verfahrens zum Einsatz kommen kann. Gezeigt ist hier eine Halbschale 250 eines Koffers, in den die Basisstation als leicht portable Basisstation integriert sein kann. In diese Kofferschale ist eine ebene Landefläche 210 eingebettet, welche insgesamt ähnlich wie beim Beispiel der Figur 1 ausgestaltet sein kann. Auch hier ist die Landefläche 210 aus vier Elektrodenflächen 220 zusammengesetzt, welche insbesondere vier gleichartige Winkelsegmente der übergeordneten Landefläche ausbilden. Diese vierteilte Landfläche ist insbesondere dazu ausgestaltet, mit einer Flugdrohne mit vier Standfüßen ähnlich wie in der Darstellung der Figur 1 zusammenzuwirken. Insbesondere können vier Kontaktelektroden 140 einer solchen Flugdrohne 100 beim Landen mit den vier Elektrodenflächen in elektrischen Kontakt treten. Nach Herstellung dieser Verbindung kann der Akkumulator der Flugdrohne über die nur schematisch dargestellte Ladevorrichtung 230 der Basisstation aufgeladen werden. Dieser Ladevorgang kann von einer zentralen Steuervorrichtung 270 der Basisstation aus gesteuert werden und insgesamt ebenfalls autonom erfolgen. Das Flugsystem kann insgesamt energieautark sein, was im vorliegenden Beispiel durch Integration eines weiteren Akkumulators 260 in die portable Basisstation 200 realisiert ist.

Im Zentrum Z ihrer Landefläche 210 kann die Basisstation eine optionale Kamera 280 aufweisen. Diese Kamera 280 wird von der zentralen Steuervorrichtung 270 der Basisstation angesteuert und ausgelesen. Mittels Bewegungs- und Objekterkennung kann so eine im Landeanflug befindliche Flugdrohne 100 von der Basisstation 200 autonom erkannt werden. Diese Erkennung kann vorteilhaft in der Steuervorrichtung 270 die Aktivierung einer Landeroutine auslösen. Dabei wird das Zentrum der anfliegenden Flugdrohne innerhalb eines gewissen Toleranzbereichs über dem Zentrum Z der Basisstation zentriert, und über eine passende Winkelausrichtung kann über diese Bilderkennung und Ansteuerung erreicht werden, dass die Standfüße 130 bzw. deren Kontaktelektroden 140 der Flugdrohne in einem gewissen Toleranzbereich T um ihre vorgegebene Sollposition P zum Landen kommen. Diese optionale Kamera 280 der Basisstation kann zusätzlich dazu benutzt werden, um bei einer Erkennung der anfliegenden Drohne und unter Verwendung der aktuellen Positionskoordinaten der Basisstation das autonom generierte Objektmodell der Flugdrohne zu verbessern bzw. zu rekalibrieren.

Figur 3 zeigt eine schematische teilperspektivische Darstellung eines Innenraums 300, in dem das erfindungsgemäße Verfahren zum Einsatz gebracht wird. In diesem Innenraum ist eine zu überwachende Industrieanlage 350 angeordnet, z.B. eine industrielle Fertigungsstraße mit ein oder mehreren Fertigungsrobotern 351 und einer Förderanlage 352, mit der ein zu fertigendes Objekt 353 während des Fertigungsprozesses weitertransportiert werden kann. Bei der Überwachung dieser Fertigungsanlage wird ein Flugsystem mit einer Basisstation 200 und einer Flugdrohne 100 genutzt, das insbesondere ähnlich wie beim Beispiel der Figuren 1 und 2 ausgestaltet sein kann. Die Flugdrohne 100 kann dabei von der Landefläche 210 der Basisstation 200 aus entlang einer beispielhaften Flugbahn 400 zu Erkundungs- und/oder Überwachungsflügen starten. Es können auch Flüge durchgeführt werden, bei denen sowohl Erkundungsals auch Überwachungsaufgaben innerhalb desselben Flugs durchgeführt werden. Jedenfalls wird in einem oder mehreren Erkundungsflügen mit Hilfe der in die Flugdrohne integrierten Kamera und gegebenenfalls unter Nutzung zusätzlicher Sensordaten autonom ein dreidimensionales Objektmodell von dem Innenraum erzeugt. Dabei werden von der Flugdrohne die wesentlichen Elemente der Fertigungsanlage erkannt, nämlich hier z.B. die einzelnen Fertigungsroboter 351 und die Förderanlage 352. Nach Erstellung des Objektmodells können dann ein oder mehrere Überwachungsflüge durchgeführt werden, bei denen insbesondere bestimmte Zielobjekte lokal angeflogen werden. Allgemein wird bei einem solchen Überwachungsflug mit einem der zusätzlichen in die Drohne integrierten Sensoren 181, 182 eine physikalische Eigenschaft in dem Innenraum ortsaufgelöst gemessen.

Die ortsaufgelöste Messung kann insbesondere in der lokalen Umgebung eines vorgegebenen Zielobjekts durchgeführt werden. Ein solches Zielobjekt kann z.B. ein bestimmter Fertigungsroboter sein, welcher bereits bei einem der Erkundungsflüge identifiziert wurde. In der lokalen Umgebung dieses Zielobjekts kann dann die physikalische Eigenschaft insbesondere in einem Raster von dreidimensional verteilten Gitterpunkten G ortsaufgelöst gemessen werden. So kann ein lokales Profil von z.B. einer Temperatur oder einer Gaskonzentration oder einer anderen physikalischen Eigenschaft erstellt werden, was z.B. die Überwachung eines Zustands oder eines Prozessfortschritts ermöglicht. Beispielsweise kann durch Überwachung von bestimmten physikalischen Größen die Erkennung oder auch die Vorhersage eines Fehlerzustands eines Fertigungsroboters ermöglicht werden. In ähnlicher Weise können auch Zustände von anderen Elementen der Fertigungsstraße (z.B. auch der Förderanlage oder von anderen hier nicht dargestellten Elementen) oder auch ein Prozessfortschritt des zu fertigenden Objekts oder der Verbrauch von Materialien überwacht werden. Eine solche Überwachung kann z.B. kontinuierlich in bestimmten zeitlichen Abständen oder auch getriggert durch bestimmte Ereignisse (z.B. einen von einer Anlagenkomponente ausgelösten Alarm erfolgen), um beispielsweise das Vorliegen einer möglichen Fehlerursache zu überprüfen. Auf diese Weise kann die automatisierte Überwachung einer industriellen Fertigungsanlage im Gegensatz zu rein stationären Kameras mit einer deutlichen höheren Genauigkeit erfolgen, und die Ursache von Fehlerzuständen kann durch die zusätzliche physikalische Messung leichter erkannt werden. Das dazu verwendete Flugsystem kann insgesamt portabel und autark ausgestaltet sein, wie hier durch die Ausgestaltung der Basisstation 200 als tragbarer Koffer angedeutet ist.

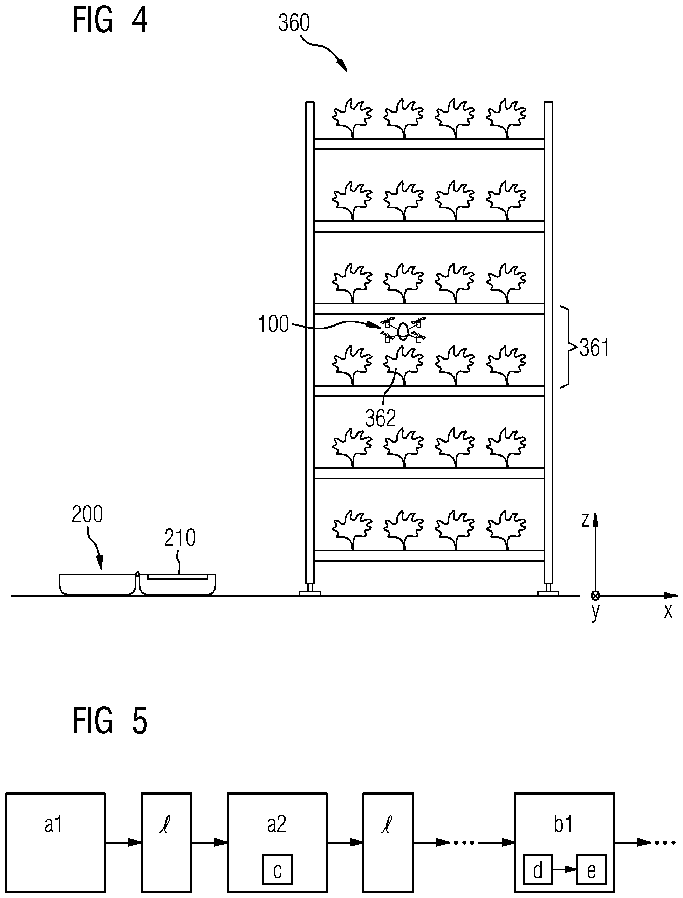

Figur 4 zeigt ein weiteres Anwendungsbeispiel, bei dem das erfindungsgemäße Überwachungsverfahren genutzt wird. So zeigt Figur 4 einen Teil einer Anlage 360 für den automatisierten Pflanzenanbau, welche ebenfalls innerhalb eines Innenraums betrieben wird. Diese Anlage umfasst ein Pflanzregal mit mehreren Pflanzetagen 361, in denen einzelne Pflanzen 362 in einem automatisierten Prozess angebaut werden. Auch eine solche Anlage kann mit dem erfindungsgemäßen Überwachungssystem überwacht werden, z.B. im Hinblick auf den Wachstumsfortschritt und den sonstigen Gesundheits- oder Bewässerungszustand der Pflanzen. Auch hier startet die eingesetzte Flugdrohne 100 von der Ladefläche 210 einer portablen Ladestation 200 aus und kann von dort aus die entsprechenden Erkundungs- und Überwachungsflüge durchführen. Die Flugdrohne 100 ist bevorzugt so leicht und kompakt ausgestaltet, dass sie zwischen den einzelnen Pflanzetagen 361 hineinfliegen kann, ohne durch die entstehenden Luftverwirbelungen die Pflanzen zu stark zu beeinträchtigen. Durch entsprechende ortsaufgelöste physikalische Messungen kann die Flugdrohne 100 nicht nur optisch den Zustand der einzelnen Pflanzen 362 überwachen, sondern auch Messungen in Bezug auf Feuchtigkeit, lokale CO2-Konzentration und ähnliches durchführen. Optional kann die Flugdrohne auch vor Ort weitere Aufgaben erledigen, z.B. das Absetzen von Saatgut oder einer kleinen und leichten Düngemittelportion.

Das erfindungsgemäße Verfahren ist nicht auf die gezeigten Anwendungsbeispiele beschränkt, sondern sie ist auch auf zahlreiche andere Überwachungsaufgaben in Innenräumen anwendbar. Um dies zu verdeutlichen, zeigt Figur 5 ein schematisches Ablaufdiagramm für das Verfahren in allgemeiner Form. Dabei wird mit der Flugdrohne von der Basisstation aus ein erster autonomer Erkundungsflug a1 durchgeführt. Am Ende dieses ersten Erkundungsflugs fliegt die Flugdrohne zurück zur Basisstation, und ihr Akkumulator wird dort in einem Ladeschritt l wieder aufgeladen. Bereits beim ersten Erkundungsflug a1 wird ein grobes Objektmodell von dem zu überwachenden Innenraum erstellt. Dieses kann bei einem zweiten Erkundungsflug a2 und optionalen weiteren Erkundungsflügen iterativ verfeinert werden. So kann z.B. innerhalb des zweiten Erkundungsflugs a2 in einem Schritt c die Erkennung von ein oder mehreren Zielobjekten erfolgen. Auch nach dem zweiten Erkundungsflug a2 erfolgt wiederum ein Ladeschritt l auf der Ladestation, und es können ggf. weitere Erkundungsflüge folgen, wie durch die Punkte angedeutet. Wenn das Objektmodell hinreichend genau feststeht, können im Anschluss ein oder mehrere Überwachungsflüge erfolgen, von denen hier beispielhaft nur ein erster Überwachungsflug b1 gezeigt ist. Im Rahmen dieses Überwachungsflugs kann z.B. in Schritt d eines von den in Schritt c erkannten Zielobjekten angeflogen werden. In einem darauffolgenden Schritt e kann im Bereich dieses Zielobjekts eine lokale Aufgabe durchgeführt werden. Dies kann insbesondere eine lokale ortsaufgelöste Messung sein, aber auch eine andere Aufgabe, die eine Interaktion zwischen der Flugdrohne und dem Zielobjekt erfordert. Wie durch die Punkte am Ende des Ablaufdiagramms angedeutet, können sich weitere solche Überwachungsflüge und ggf. auch weitere Erkundungsflüge mit dazwischengeschalteten Ladeschritten anschließen. Insbesondere können die Überwachungsflüge in bestimmten Abständen oder auch event-getriggert wiederholt werden, um eine kontinuierliche Überwachung des Innenraums zu ermöglichen. Alternativ zu der hier gezeigten klaren Separation von Erkundungs- und Überwachungsflügen ist auch eine Kombination möglich, bei der Erkundungs- und Überwachungsaufgaben in demselben Flug durchgeführt werden und gegebenenfalls ineinander übergehen. Insbesondere kann es vorteilhaft sein, wenn bei den späteren Überwachungsflügen das ursprüngliche Objektmodell des Innenraums kontinuierlich angepasst und verfeinert wird.

### Bezugszeichenliste

- 1: Flugsystem
- 100: Flugdrohne
- 110: Antriebsvorrichtung (Rotoren)
- 120: Akkumulator
- 130: Standfuß (Landegestell)
- 140: Kontaktelektrode (Federkontaktstift)
- 150: Drohnenkörper
- 160: Tragarm
- 170: Mikroprozessor
- 180: Kamera
- 181: erster zusätzlicher Sensor
- 182: zweiter zusätzlicher Sensor
- 200: Basisstation
- 210: Landefläche
- 220: Elektrodenfläche (Feld der Landefläche)
- 230: Ladevorrichtung
- 250: Kofferschale
- 260: Akkumulator
- 270: Steuervorrichtung
- 280: Kamera
- 300: Innenraum
- 350: Industrieanlage
- 351: Fertigungsroboter
- 352: Förderanlage
- 353: zu fertigendes Objekt
- 360: Anlage für den Pflanzenanbau
- 361: Pflanzetage
- 362: Pflanze
- 400: Flugbahn
- a1: erster Erkundungsflug
- a2: zweiter Erkundungsflug
- b1: erster Überwachungsflug
- c: Erkennung von Zielobjekten
- d: Anfliegen eines Zielobjekts
- e: Durchführung einer lokalen Aufgabe
- G: Gitterpunkte
- l: Ladeschritt
- P: Sollposition
- T: Toleranzbereich
- x,y: horizontale Koordinaten
- z: vertikale Koordinate
- Z: Zentrum

## Patentansprüche

1. Verfahren zur Überwachung eines Zustands und/oder eines Prozesses in einem Innenraum (300), insbesondere einem Innenraum eines Gebäudes, mittels eines Flugsystems (1),
wobei das Flugsystem (1) eine Basisstation (200) und eine Flugdrohne (100) mit einem Fluggewicht unterhalb von 250 g umfasst,
wobei das Verfahren die folgenden Schritte umfasst:
a) Durchführung von ein oder mehreren autonomen Erkundungsflügen mit der Flugdrohne (100), wobei eine in die Flugdrohne (100) integrierte Kamera (180) dazu genutzt wird, ein dreidimensionales Objektmodell von dem Innenraum (300) zu erzeugen,
b) Durchführung von ein oder mehreren autonomen Überwachungsflügen, wobei ein in die Flugdrohne integrierter zusätzlicher Sensor (181) verwendet wird, um eine physikalische Eigenschaft in dem Innenraum (300) ortsaufgelöst zu messen.

2. Verfahren nach Anspruch 1, wobei innerhalb von Schritt a) die Erzeugung des dreidimensionalen Objektmodells unter Nutzung der Methode der Sensordatenfunktion erfolgt, wobei zusätzlich zu den Messdaten der integrierten Kamera (180) die Messdaten von einem weiteren Sensor (182) mit einem unterschiedlichen Messprinzip verwendet werden.

3. Verfahren nach einem der Ansprüche 1 oder 2, wobei in Schritt b) die physikalische Eigenschaft für eine Vielzahl von dreidimensional verteilten Gitterpunkten (G) erfasst wird.

4. Verfahren nach einem der vorhergehenden Ansprüche, welches die folgenden zusätzlichen Schritte umfasst:
c) Erkennung von ein oder mehreren ausgewählten Zielobjekten (351,362) aufgrund einer Übereinstimmung mit einem vorgegebenen Zielobjekt-Typ und
d) Anfliegen der unmittelbaren Umgebung eines in Schritt c) erkannten Zielobjekts (351,362) mit der Flugdrohne (100).

5. Verfahren nach Anspruch 4, welches den folgenden zusätzlichen Schritt umfasst.
e) Durchführung einer vordefinierten Aufgabe am Ort des Zielobjekts (351,362).

6. Verfahren nach einem der vorhergehenden Ansprüche, wobei der in Schritt b) verwendete zusätzliche Sensor (181) ein Temperatursensor, ein Feuchtesensor, ein Kohlendioxidsensor, ein Vibrationssensor und/oder ein Bewegungssensor ist.

7. Verfahren nach einem der vorhergehenden Ansprüche, wobei die Flugdrohne (100) ein Fluggewicht von höchstens 150 g aufweist.

8. Verfahren nach einem der vorhergehenden Ansprüche, welches zur Überwachung eines Zustands und/oder eines Prozesses in einer Industrieanlage (350,360) eingesetzt wird.

9. Verfahren nach einem der vorhergehenden Ansprüche, welches zur Überwachung eines Zustands und/oder eines Prozesses in einer Anlage (360) für automatisierten Pflanzenanbau eingesetzt wird.

10. Verfahren nach einem der vorhergehenden Ansprüche, welches zur Erkennung eines Brands und/oder eines unerwünschten Lecks eines Gases oder einer Flüssigkeit in einem Gebäude eingesetzt wird.

11. Verfahren nach einem der vorhergehenden Ansprüche, mit welchem ein Zustand derart überwacht wird, dass aus einer Abweichung der ortsaufgelöst gemessenen physikalischen Eigenschaft von einem Sollbereich auf das Vorliegen eines Fehlerzustands geschlossen wird.

12. Verfahren nach einem der vorhergehenden Ansprüche, mit welchem ein Prozess derart überwacht wird, dass aus einer wiederholten Messung der physikalischen Eigenschaft in Schritt b) ein Prozessfortschritt abgeleitet wird, welcher mit einem für den jeweiligen Zeitpunkt vorab festgelegten Zielwert verglichen wird.

13. Verfahren nach einem der vorhergehenden Ansprüche, bei welchem die Überwachung mittels des Flugsystems (1) insgesamt drahtlos erfolgt und insbesondere ohne die Nutzung einer fest installierten Systemkomponente erfolgt.

14. Verfahren nach einem der vorhergehenden Ansprüche, bei welchem das Flugsystem (1) mehrere Basisstationen (200) und/oder mehrere Flugdrohnen (100) umfasst, die gleichzeitig betrieben werden.

15. Überwachungssystem, das zur autonomen Durchführung des Überwachungsverfahrens nach einem der Ansprüche 1 bis 14 ausgelegt ist und ein Flugsystem (1) umfasst mit
- wenigstens einer Basisstation (200) und
- wenigstens einer autonom flugfähigen Flugdrohne (100) mit einer integrierten Kamera (180) und einem zusätzlichen integrierten Sensor (181).
